# EUROPEAN PATENT SPECIFICATION

(11) **EP 4 205 549 B1**
(45) Date of publication and mention of the grant of the patent: **13.11.2024**
(21) Application number: 22216880.9
(22) Date of filing: 28.12.2022
(51) Int. Cl.: A21D 13/066, A21D 13/32, A21D 13/50, A23G 3/50, A23G 3/54

(54) **METHOD FOR PRODUCING MACARONS AND A FILLING AND MACARONS OBTAINED**
VERFAHREN ZUR HERSTELLUNG VON MAKARONS UND FÜLLUNGEN UND ALSO ERHALTENE MAKARONS
PROCÉDÉ POUR LA FABRICATION DE MACARONS ET FOURRAGES ET MACARONS AINSI OBTENUS

(30) Priority: 29.12.2021 BE 202106094
(43) Date of publication of application: 05.07.2023
(73) Proprietor: Poppies Bakeries d'Haubry BV, 8980 Zonnebeke (BE)
(72) Inventor: DESMET, Philippe, 8980 Zonnebeke (BE); VANDOORNE, Geert, 8980 Zonnebeke (BE)
(74) Representative: Brantsandpatents bv

(56) References cited:
- WO-A2-2020/036551
- KR-A- 20160 135 509
- KR-A- 20200 021 369
- KR-A- 20210 086 880
- KR-B1- 101 672 913
- KR-B1- 102 082 973
- KR-B1- 102 126 013
- KR-B1- 102 202 102
- KR-B1- 102 256 073

## Description

### TECHNICAL FIELD

The invention relates to a method for producing macaron shells.

### PRIOR ART

Macarons are small round airy and crispy dough cookies that adhere to each other by means of a soft filling. The dough biscuits, also called shells, have a flat bottom and a convex top. Characteristic of the shells is the so-called "foot", a layer with an airy texture formed just above the flat bottom of the shell.

This foot is created because the macarons are dried before they are baked. This creates a harder layer or crust on the outside of the shell that is exposed to the air. Moisture will try to evaporate from the shell during baking. Since this vapor cannot escape along the formed crust, the shell is pushed upwards to allow the vapor to escape. To guarantee the uniformity and organoleptic properties of the macarons, it is not only important that the macaron always has the same composition and dimensions, but also that this foot always has the same proportions.

However, this is very difficult to achieve, since not only the composition of the dough, but also the drying and baking process are extremely important to obtain a shell with uniform dimensions and a uniform foot.

The present invention aims to find a solution for at least some of the above problems.

Document KR1 02082973 discloses a prior art macaron (and the method for its manufacture) consisting out of two shells made from a dough, and a filling, each shell having a flat bottom and a convex top.

### SUMMARY OF THE INVENTION

The invention relates to a method for producing macaron shells with a foot. More particularly, the invention relates to a method according to claim 1, wherein a dough is made that comprises at least a sugar, egg whites and almonds, wherein the different ingredients of the dough are combined and mixed, wherein a dough with a density between 650 grams and 850 grams per liter is obtained, wherein in a first step the dough is sprayed into individual shells on a conveyor belt, the shells are then transported through a drying tunnel where the shells undergo a drying step and wherein the shells are then transported through a baking tunnel where the shells undergo a baking step, where the ratio between the diameter and the height of the shell immediately after spraying the dough into separate shells on the conveyor belt is between 4 and 5.5, the ratio between the diameter and the height of the shell immediately after transport through the drying tunnel is between 4.5 and 6 and the ratio between the diameter and the height of the shell immediately after transport through the baking tunnel is between 3 and 4. Preferred embodiments of this method are presented in claims 2 to 6.

The inventors have discovered that when the shells meet the aforementioned ratios between diameter and height of the shell at these specific steps, a shell with the ideal dimensions and the ideal proportions of the foot is obtained.

### DETAILED DESCRIPTION

The invention relates to a method for producing macaron shells.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In a first aspect, the invention relates to a method for producing macaron shells with a foot, wherein a dough is made that comprises at least a sugar, egg whites and almonds, wherein the different ingredients of the dough are combined and mixed, wherein a dough with a density between 650 grams and 850 grams per liter is obtained, in which in a first step the dough is sprayed into individual shells on a conveyor belt, the shells are then transported through a drying tunnel where the shells undergo a drying step and wherein the shells are then transported through a baking tunnel where the shells undergo a baking step, wherein the ratio between the diameter and the height of the shell immediately after spraying the dough into separate shells on the conveyor belt is between 4 and 5.5, preferably between 4.5 and 5.5, the ratio between the diameter and the height of the shell immediately after transport through the drying tunnel is between 4.5 and 6, preferably between 4.75 and 5.75, and the ratio between the diameter and the height of the shell immediately after transport through the baking tunnel is between 3 and 4, preferably between 3.25 and 4.

The density of the dough is measured in a container with a rounded bottom, where the weight obtained is converted by the amount of water (in grams) that fits in the same container. In a preferred embodiment, the sugar is selected from granulated sugar and powdered sugar or a combination thereof. In a preferred embodiment, the sugar comprises both granulated sugar and powdered sugar, preferably in a ratio between 0.4 and 0.7.

Macarons are small round airy and crispy dough cookies that adhere to each other by means of a soft filling. The dough biscuits, also called shells, have a flat bottom and a convex top. Characteristic of the shells is the so-called "foot", a layer formed just above the flat bottom of the shell.

This foot is created because the macarons are dried before they are baked. This creates a harder layer or crust on the outside of the shell that is exposed to the air. Moisture will try to evaporate from the shell during baking. Since this vapor cannot escape along the formed crust, the shell is pushed upwards to allow the vapor to escape. In this way, the macaron gets a more closed visible surface (at the level of the harder layer) while the internal part that makes contact with the filling (at the level of the foot) is airier. So there is a significant difference between the filling, the part of the shell that contacts the filling and the outer visible shell of the shell. To guarantee the uniformity and organoleptic properties of the macarons, it is not only important that the macaron always has the same height and diameter, but also that this foot always has the same proportions. Not only the initial dose and the composition are important here, which determines the ratio between the diameter and the height of the shell immediately after the dough has been sprayed into individual shells on the conveyor belt, but also the ratio between the diameter and the height of the shell immediately after transport through the drying tunnel, as this also determines the size of the harder layer (the crust) before the baking process and evaporation begins, which pushes the shell upwards and forms the foot. Also important is the ratio between the diameter and the height of the shell immediately after transport through the baking tunnel, when the baking process is over and this determines the dimensions of the final shell and the foot.

The inventors have discovered that in order to obtain a shell with the ideal dimensions and the ideal proportions of the foot, the ratio between the diameter and the height of the shell immediately after spraying the dough into separate shells on the conveyor belt is between 4 and 5.5, preferably between 4.5 and 5.5, the ratio between the diameter and the height of the shell immediately after transport through the drying tunnel is between 4.5 and 6, preferably between 4.75 and 5.75, and the ratio between the diameter and the height of the shell immediately after transport through the baking tunnel is between 3 and 4, preferably between 3.25 and 4. When the shells meet the aforementioned dimensions at these specific steps, a shell with the ideal dimensions and the ideal proportions of the foot is obtained.

In a preferred embodiment, the temperature in the drying tunnel is between 30°C and 50°C. This temperature is sufficiently high to form the crust on the air-exposed surfaces of the shell, but on the other hand it is also not too high, since then the evaporation process would already start, which would counteract the formation of the crust.

In a preferred embodiment, the shells are transported through the drying tunnel for 8 to 15 minutes. This duration is sufficiently long to start the initial formation of the harder layer.

The shells are then transported through a baking tunnel. In a preferred embodiment, the baking tunnel comprises at least 2 temperature-controlled compartments, wherein the temperature in the first compartment is between 80°C and 120°C and the temperature in the other compartments being between 150°C and 250°C. Because the temperature in the first compartment is between 80°C and 120°C, the shell can dry even further and the harder layer can harden sufficiently to prevent the escape of the vapor in the other compartments, where the temperature is between 150°C and 250°C. The higher temperature in the other compartments ensures that the shell is baked properly, whereby the formed vapor in the shell ensures that the shell is pushed upwards, and the foot is formed.

In a preferred embodiment, the shells are transported through the baking tunnel for 20 to 40 minutes, with the shells remaining in the first compartment for at least 4 minutes. This period of time in the first compartment at a temperature between 80°C and 120°C is necessary to allow the shell to dry even further and the harder layer to become sufficiently hard in order to prevent the escape of the vapor in the other compartments. During the residence time in the other compartments at a temperature between 150°C and 250°C, the shells are given sufficient time to bake out and form the foot with the correct properties. Important in the baking process is that the temperature is not too high, because too high a temperature will cause too much evaporation and steam formation of the moisture in the shell, which could cause the crust to crack.

In a preferred embodiment, the shells are transported after baking through a cooling tunnel where the shells undergo a cooling step, wherein the temperature in the cooling tunnel is between 5°C and 15°C. This cooling step ensures that the shells cool down quickly and become harder, giving them their crispiness.

In a preferred embodiment, the shells are transported through the cooling tunnel for 5 to 20 minutes. This period of time is long enough to cool the shells sufficiently, yet not too long so that the cooling process remains economically viable.

In a preferred embodiment, the shell dough comprises at least 20% (m/m) almonds and the dough is prepared by separately producing a meringue at a temperature of 35-45°C and an almond dough at a temperature of 20-25°C, to then mix the meringue and the almond dough at a temperature between 25-30°C.

Preferably, the meringue has a density between 200 and 350 grams per liter, preferably between 250 and 300 grams per liter, the almond dough has a density between 1000 and 1300 grams per liter, preferably between 1100 and 1200 grams per liter and the final macaron dough has an average density between 650 and 850 grams per liter, preferably between 700 and 800 grams per liter.

In a preferred embodiment, the average water activity of the dough decreases by at least 30% between spraying the dough onto the conveyor belt and the end of the baking step.

The water activity is a measure of the amount of free water present in a product. The a_{w} value is determined when the relative humidity around a product is stable. The a_{w} value is a dimensionless unit. The a_{w} spectrum runs from 0 to 1. An a_{w} value of 0 indicates that there is no free water in the product. For pure water, an a_{w} value of 1 is the result.

An a_{w} meter is preferably used to measure the a_{w} value. This meter contains a chamber that can be completely closed off. The sample is placed in the chamber and sealed. The a_{w} meter uses a chilled-mirror dew-point technique to measure the water activity of a sample. The sample is equilibrated with a sealed chamber containing a mirror where condensation on the mirror can be detected. At equilibrium, the relative humidity of the air in the chamber is equal to the water activity of the sample. The temperature of the mirror is precisely controlled by a thermoelectric (Peltier) cooler. Detection of the exact point where condensation first appears on the mirror is done with a photoelectric cell. A beam of light is directed at the mirror and reflected into a photodetector cell. The photodetector detects the change in reflection coefficient when condensation occurs on the mirror. The dew point sensor measures the dew point temperature of the air in the sealed chamber, and the infrared thermometer measures the temperature of the sample. From these measurements, the relative humidity of the headspace is calculated as the ratio of the dew point temperature to the saturation vapor pressure at the sample temperature. When the water activity of the sample and the relative humidity of the air are in equilibrium, measurement of the headspace humidity gives the water activity of the sample.

As described above, macarons consist of two crunchy almond cookies, which are somewhat chewy inside, and are stuck together with a soft filling. The contrast between the crispy outside, the slightly chewy inside and the soft filling is characteristic of the macaron. With such a drop in water activity, sufficient free water has evaporated and the shell has sufficiently baked out.

In what follows, the invention is described by way of non-limiting examples illustrating the invention, and which are not intended to and should not be interpreted as limiting the scope of the invention.

### EXAMPLES

### EXAMPLE 1:

To prepare macaron shells, a dough is made that includes granulated sugar, powdered sugar, egg whites and almonds and has a density of about 750 grams per liter. The dough is then sprayed into individual shells on a conveyor belt, wherein the ratio between the diameter and the height of the shell immediately after spraying the dough is 4.5. In a next step, these shells are transported through a drying tunnel where the shells undergo a drying step, wherein the ratio between the diameter and the height of the shell immediately after transport through the drying tunnel is 4.75. The temperature in the drying tunnel is approximately 42°C and the shells are transported through it for 11 minutes. This temperature is sufficiently high and the duration of the transport is long enough to form the crust on the air-exposed surfaces of the shell, but on the other hand is also not too high and too long, since then the evaporation process would already start, which would counteract the formation of the crust.

The shells are then transported through a baking tunnel where the shells undergo a baking step. The baking tunnel has 4 temperature-controlled compartments, wherein the temperature in the first is about 90°C and the shells are transported through this for about 5 minutes and wherein the temperature in the other compartments is between 150°C and 250°C and the shells are transported through this for approximately 25 minutes. Because the temperature in the first compartment is only 90°C, the shell can dry further and the harder layer can harden sufficiently in order to prevent the escape of the vapor in the other compartments, where the temperature is higher. The higher temperature in the other compartments ensures that the shell is baked properly, whereby the formed vapor in the shell ensures that the shell is pushed upwards and the foot is formed.

Important in the baking process is that the temperature is not too high, because too high a temperature will cause too much evaporation and steam formation of the moisture in the shell, which could cause the crust to crack. The ratio between the diameter and the height of the shell immediately after transport through the baking tunnel is approximately 3.5.

Because the shells have such proportions of diameter and height at these specific steps, the shells will always have the correct dimensions at the end of the baking process (a diameter of approximately 40 mm and a height of approximately 11 mm) and will also have a foot at the bottom of the shell with the desired proportions, in particular a height of about 3 mm, and uniform macarons with the desired organoleptic properties can be obtained.

## Claims

1. A method for producing macaron shells, wherein a dough is made that comprises at least a sugar, egg whites and almonds, wherein the different ingredients of the dough are combined and mixed, wherein a dough with a density between 650 grams and 850 grams per liter is obtained, wherein in a first step the dough is sprayed into individual shells on a conveyor belt, the shells are then transported through a drying tunnel where the shells undergo a drying step and wherein the shells are then transported through a baking tunnel where the shells undergo a baking step, wherein the temperature in the drying tunnel is between 30°C and 50°C and the shells are transported through the drying tunnel for 8 to 15 minutes and wherein the temperature in the baking tunnel is between 80°C and 250°C and the shells are transported through the baking tunnel for 20 to 40 minutes, **characterized in, that** the ratio between the diameter and the height of the shell immediately after spraying the dough into separate shells on the conveyor belt is between 4 and 5.5, the ratio between the diameter and the height of the shell immediately after transport through the drying tunnel is between 4.5 and 6 and the ratio between the diameter and the height of the shell immediately after transport through the baking tunnel is between 3 and 4.

2. Method according to claim 1, wherein the baking tunnel comprises at least 2 temperature-controlled compartments, wherein the temperature in the first compartment is between 80°C and 120°C and the temperature in the other compartments being between 150°C and 250°C.

3. Method according to claim 2, with the shells remaining in the first compartment for at least 4 minutes.

4. Method according to any of the preceding claims, wherein the shells are transported after baking through a cooling tunnel where the shells undergo a cooling step, wherein the temperature in the cooling tunnel is between 5°C and 15°C.

5. Method according to claim 4, wherein the shells are transported through the cooling tunnel for 5 to 20 minutes.

6. Method according to any of the preceding claims, wherein the average water activity of the dough decreases by at least 30% between spraying the dough onto the conveyor belt and the end of the baking step.

## Patentansprüche

1. Verfahren zum Erzeugen von Macaron-Scheiben, wobei ein Teig hergestellt wird, der mindestens einen Zucker, Eiweiß und Mandeln umfasst, wobei die verschiedenen Zutaten des Teiges kombiniert und gemischt werden, wobei ein Teig mit einer Dichte zwischen 650 Gramm und 850 Gramm pro Liter erzielt wird, wobei in einem ersten Schritt der Teig zu einzelnen Schieben auf ein Förderband gespritzt wird, die Scheiben dann durch einen Trocknungstunnel transportiert werden, in dem die Scheiben einem Trocknungsschritt unterzogen werden, und wobei die Scheiben dann durch einen Backtunnel transportiert werden, in dem die Scheiben einem Backschritt unterzogen werden, wobei die Temperatur in dem Trocknungstunnel zwischen 30°C und 50°C beträgt und die Scheiben 8 bis 15 Minuten lang durch den Trocknungstunnel transportiert werden und wobei die Temperatur in dem Backtunnel zwischen 80°C und 250°C beträgt und die Scheiben 20 bis 40 Minuten lang durch den Backtunnel transportiert werden, **dadurch gekennzeichnet, dass** das Verhältnis zwischen dem Durchmesser und der Höhe der Scheibe unmittelbar nach dem Spritzen des Teigs zu einzelnen Scheiben auf das Förderband zwischen 4 und 5,5 beträgt, das Verhältnis zwischen dem Durchmesser und der Höhe der Scheibe unmittelbar nach dem Transport durch den Trocknungstunnel zwischen 4,5 und 6 beträgt und das Verhältnis zwischen dem Durchmesser und der Höhe der Scheibe unmittelbar nach dem Transport durch den Backtunnel zwischen 3 und 4 beträgt.

2. Verfahren nach Anspruch 1, wobei der Backtunnel mindestens zwei temperaturgesteuerte Abteilungen umfasst, wobei die Temperatur in der ersten Abteilung zwischen 80°C und 120°C beträgt und die Temperatur in der anderen Abteilung zwischen 150°C und 250°C beträgt.

3. Verfahren nach Anspruch 2, wobei die Scheiben mindestens 4 Minuten lang in der ersten Abteilung bleiben.

4. Verfahren nach einem der vorhergehenden Ansprüche, wobei die Scheiben nach dem Backen durch einen Kühltunnel transportiert werden, in dem die Scheiben einem Kühlungsschritt unterzogen werden, wobei die Temperatur in dem Kühltunnel zwischen 5°C und 15°C beträgt.

5. Verfahren nach Anspruch 4, wobei die Scheiben 5 bis 20 Minuten lang durch den Kühltunnel transportiert werden.

6. Verfahren nach einem der vorhergehenden Ansprüche, wobei die durchschnittliche Wasseraktivität des Teiges zwischen dem Spritzen des Teiges auf das Förderband und dem Ende des Backschritts um mindestens 30% abnimmt.

## Revendications

1. Procédé de production de coques de macaron, dans lequel une pâte est préparée qui comprend au moins un sucre, des blancs d'oeuf et des amandes, dans lequel les différents ingrédients de la pâte sont combinés et mélangés, dans lequel une pâte ayant une masse volumique entre 650 grammes et 850 grammes par litre est obtenue, dans lequel dans une première étape la pâte est pulvérisée dans des coques individuelles sur une bande transporteuse, les coques sont alors transportées à travers un tunnel de séchage où les coques sont soumises à une étape de séchage et dans lequel les coques sont alors transportées à travers un tunnel de cuisson où les coques sont soumises à une étape de cuisson, dans lequel la température dans le tunnel de séchage est entre 30°C et 50°C et les coques sont transportées à travers le tunnel de séchage pendant 8 à 15 minutes et dans lequel la température dans le tunnel de cuisson est entre 80°C et 250°C et les coques sont transportées à travers le tunnel de cuisson pendant 20 à 40 minutes, **caractérisé en ce que** le rapport entre le diamètre et la hauteur de la coque immédiatement après la pulvérisation de la pâte dans des coques séparées sur la bande transporteuse est entre 4 et 5,5, le rapport entre le diamètre et la hauteur de la coque immédiatement après le transport à travers le tunnel de séchage est entre 4, 5 et 6 et le rapport entre le diamètre et la hauteur de la coque immédiatement après le transport à travers le tunnel de cuisson est entre 3 et 4.

2. Procédé selon la revendication 1, dans lequel le tunnel de cuisson comprend au moins 2 compartiments à température régulée, dans lequel la température dans le premier compartiment est entre 80°C et 120°C et la température dans les autres compartiments étant entre 150°C et 250°C.

3. Procédé selon la revendication 2, avec les coques restant dans le premier compartiment pendant au moins 4 minutes.

4. Procédé selon l'une quelconque des revendications précédentes, dans lequel les coques sont transportées après la cuisson à travers un tunnel de refroidissement où les coques sont soumises à une étape de refroidissement, dans lequel la température dans le tunnel de refroidissement est entre 5°C et 15°C.

5. Procédé selon la revendication 4, dans lequel les coques sont transportées à travers le tunnel de refroidissement pendant 5 à 20 minutes.

6. Procédé selon l'une quelconque des revendications précédentes, dans lequel l'activité moyenne de l'eau de la pâte diminue d'au moins 30% entre la pulvérisation de la pâte sur la bande transporteuse et la fin de l'étape de cuisson.
